# EUROPÄISCHE PATENTSCHRIFT

(11) **EP 0 657 986 B1**
(45) Veröffentlichungstag und Bekanntmachung des Hinweises auf die Patenterteilung: **05.03.1997**
(21) Anmeldenummer: 93119992.1
(22) Anmeldetag: 10.12.1993
(51) Int. Cl.: H02M 3/335

(54) **Getakteter Umrichter mit Optokoppler**
Switching converter with optocoupler
Convertisseur à découpage avec coupleur optique

(43) Veröffentlichungstag der Anmeldung: 14.06.1995
(73) Patentinhaber: SIEMENS AKTIENGESELLSCHAFT, 80333 München (DE)
(72) Erfinder: Immler, Josef, Dipl.-Ing. (FH), D-82178 Puchheim (DE)

(56) Entgegenhaltungen:
- EP-A- 0 509 343
- EP-A- 0 524 601
- EP-A- 0 576 702
- RADIO AND ELECTRONIC ENGINEERING, Bd.54, Nr.10, Oktober 1984, LONDON, Seiten 395 - 405; GOODMAN: 'Current mode control of switching regulators'

## Beschreibung

Die Erfindung bezieht sich auf einen wie im Oberbegriff des Patentanspruchs 1 angegebenen getakteten Umrichter mit Optokoppler.

Ein derartiger Umrichter ist bereits in der am 30.07.92 eingereichten und nicht vorveröftentlichten europäischen Patentanmeldung, EP-A-0 576 702 beschrieben. Bei jenem Umrichter sind der Eingang und der Ausgang des Umrichters mit Hilfe eines im Hauptstromkreis liegenden Übertragers und eines im Regelkreis angeordneten Optokopplers potentialmäßig voneinander getrennt. Der Optokoppler besteht aus einer lichtemittierenden Diode und einem Fototransistor. Der Fototransistsor liegt mit seinem Emitter an Bezugspotential und ist mit seinem Kollektor über einen Widerstand an eine Hilfsspannung geführt. Die Emitter-Kollektor-Strecke des Fototransistors liegt parallel zu einem Spannungsteiler, mit dessen Hilfe eine Referenzspannung gebildet wird. Diese von der Ausgangsspannung des Umrichters abhängige Referenzspannung dient als Sollwert in Verbindung mit einer Spannungsregelung durch unterlagerte Stromregelung, bei der als Istwert der im eingangsseitigen Hauptstromkreis fließende Strom dient.

Aufgabe der Erfindung ist es, einen getakteten Umrichter mit Optokoppler derart auszubilden, daß der Sollwert-Spannungsteiler an eine hochkonstante und wenig belastbare Konstantspannungsquelle angeschlossen und ein günstiger Arbeitspunkt des Fototransistors gewählt werden kann.

Gemäß der Erfindung wird der getaktete Umrichter zur Lösung dieser Aufgabe in der im kennzeichnenden Teil des Patentanspruchs 1 angegebenen Weise ausgebildet. Als fekttranstor dient dabei vorzugsweise ein MOSFET-Kleinsignaltransistor.

Durch die erfindungsgemäßen Maßnahmen ergibt sich in vorteilhafter Weise eine rückwirkungsfreie Entkopplung zwischen dem Optokoppler und der Steuerschaltung.

Ein weiterer Vorteil besteht darin, daß der Sollwert-Spannungsteiler an einer gering belastbaren Konstantspannungsquelle angeschlossen und ohne Rücksicht auf die Strom- und Spannungsanforderungen des Optokopplers dimensioniert werden kann.

Zweckmäßige Ausgestaltungen der Erfindung gehen aus den Ansprüchen 2 bis 6 hervor.

Die Maßnahmen nach Anspruch 2 sind dann zweckmäßig, wenn keine Siebung der am Strommeßwiderstand auftretenden Spannung erforderlich ist.

Die Weiterbildung nach Anspruch 3 sieht vor, daß zu der am Strommeßwiderstand abfallenden Spannung eine weitere Spannung addiert wird. Dabei ergibt sich der Vorteil, daß als Strommeßwiderstand ein besonders niederohmiger Meßwiderstand Verwendung finden kann.

Die Maßnahmen nach Anspruch 4 sind insbesondere dann von Vorteil, wenn sich eine Siebung der Strommeßspannung als zweckmäßig erweist.

Die Weiterbidlung der Erfindung nach Anspruch 5 hat den besonderen Vorteil, daß eine Konstantspannungsquelle eines integrierten Schaltregler-Steuerbausteines, die zwar hochkonstant aber vergleichsweise wenig belastbar ist, als Spannungsquelle für den Sollwert-Spannungsteiler Verwendung finden kann. Bei der Ausbildung nach Anspruch 6 gelten diese Vorteile auch in Verbindung mit einem nach Anspruch 3 vorgesehenen Istwert-Spannungsteiler.

Der Umrichter läßt sich insbesondere zur Energieversorgung in Einrichtungen der elektrischen Nachrichtenübertragungstechnik verwenden.

Die Erfindung wird anhand der in den Figuren dargestellten Ausführungsbeispiele näher erläutert.

Die Figuren zeigen jeweils einen getakteten Umrichter mit einem zwischen Optokoppler und Sollwert-Spannungsteiler angeordneten Feldeffekttransistor. Dabei zeigen
Fig. 1 einen Umrichter und
Fig. 2 einen Umrichter mit Istwert-Spannungsteiler.

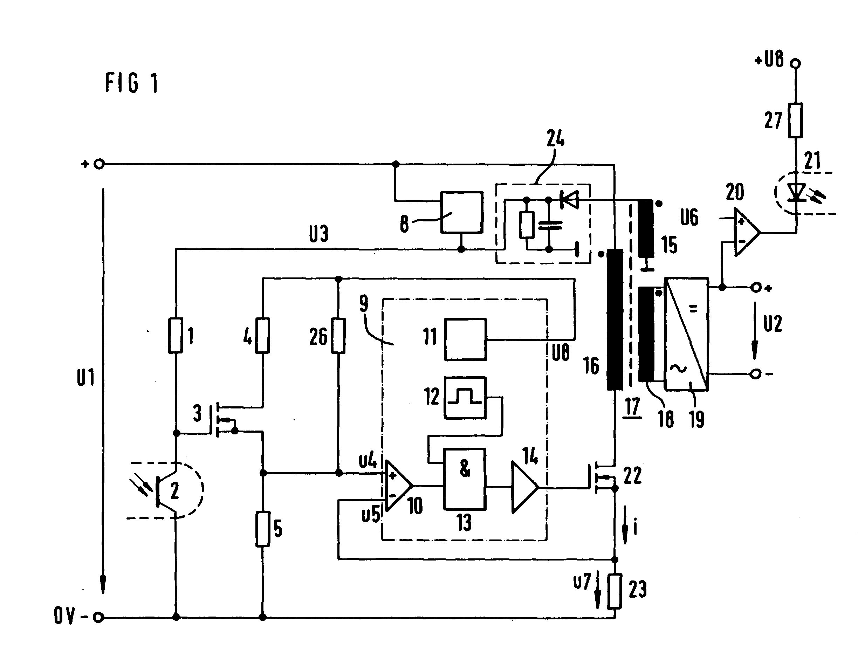

Der getaktete Gleichspannungs-Gleichspannungs-Umrichter oder Schaltregler nach Fig. 1 enthält die Steuerschaltung 9 zur Regelung der Ausgangsspannung U2 durch unterlagerte Stromregelung und zur Begrenzung des Momentanwertes des im primärseitigen Hauptstromkreis fließenden pulsförmigen Stromes i. Der primärseitige Hauptstromkreis des Umrichters verläuft vom Pluspol der nicht dargestellten Eingangs-Gleichspannungsquelle über die Primärwicklung 16 des Übertragers 17, die Drain-Source-Strecke des als Leistungsschalter dienenden Feldeffekttransistors 22 und den Strommeßwiderstand 23 zum Minuspol der Eingangs-Gleichspannungsquelle, der am Bezugspotential OV liegt.

Der Feldeffekttransistor 22 wird durch die Steuerschaltung 9 mit Hilfe von Einschaltimpulsen gesteuert, die den Feldeffekttransistor 22 jeweils während ihrer Dauer leitend steuern. Die Steuerschaltung 9 enthält eine Anordnung zur Impulsdauermodulation, mit deren Hilfe die Dauer der am Ausgang des Treibers 14 abgegebenen Einschaltimpulse variiert wird. Der Impulsgeber 12 gibt eine Folge von Taktimpulsen an den einen Eingang des UND-Gliedes 13 ab.

Der Ausgang des Komparators 10 ist mit dem anderen Eingang der UND-Schaltung 13 verbunden. Damit kann der Komparator 10 beim Erreichen eines vorgegebenen Momentanwertes des Stromimpulses i den Feldeffekttransistor 22 leitend steuernden Einschaltimpulse zeitlich begrenzen.

Die zur Speisung der Steuerschaltung 9 nötige Hilfsspannung U3 wird nach Inbetriebnahme des Umrichters zunächst von der stetig geregelten Hilfsspannunsquelle 8, danach während des regulären Betriebes zur Reduzierung der Verlustleistung aus der Hilfswicklung 15 des Leistungsübertragers 17 gespeist. Die Ausgangsspannung U3 der Hilfsspannungsquelle 8 wird auf einen Wert geregelt, der unter der Spannung liegt, die nach Beendigung des Einschaltvorganges an diesem Punkt über die Gleichrichterschaltung 24 erzeugt wird. Im Normalbetrieb liefert die Hilfsspannungsquelle 8 daher praktisch keinen Strom.

An den Ausgang des Umrichters, der die Ausgangsspannung U2 liefert, ist der Spannungsregler oder Fehlersignalverstärker 20 angeschlossen. Der nicht invertierende Eingang des Fehlersignalversärkers 20 liegt an der Referenzspannung U6. Der invertierende Eingang des Fehlersignalverstärkers 20 ist mit dem Pluspol des Umrichterausgangs verbunden.

Der primärseitige Hauptstromkreis 16, 22, 23 und der sekundärseitige Hauptstromkreis 19 sind durch den Übertrager 17 potentialmäßig voneinander getrennt. Zur Potentialtrennung im Regelkreis dient der die Fotodiode 21 und den Fototransistor 2 enthaltende Optokoppler 21, 2. Die Fotodiode 21 und der dazu in Serie angeordnete Widerstand 27 liegen zwischen dem Ausgang des Fehlersignalverstärkers 20 und der Hilfsspannung U8.

Die Emitter-Kollektor-Strecke des Fototransistors 2 gehört einer Vorrichtung zur Sollwertbildung an, die den Sollwert-Spannungsteiler Sollwert-Spannungsteilers 4, 5 enthält. Am Abgriff des 4, 5 liegt der nicht invertierende Eingang des Komparators 10. Ein Anschluß des Strommeßwiderstandes 23 und der Emitter des Fototransistors 2 liegen am gemeinsamen Bezugspotential 0V. Der Kollektor des Fototransistors 2 ist über den Widerstand 1 an die Hilfsspannung U3 geführt. Der gegenüber dem Bezugspotential 0V Spannung führende Anschluß des Strommeßwiderstandes 23 ist an den invertierenden Eingang des Komparators 10 geführt.

In dem dem Bezugspotential 0V abgewandten Zweig des Sollwert-Spannungsteilers 4, 5 liegt in Serie zum Widerstand 4 die Drain-Source-Strecke des Feldeffekttransistors 3. Dabei ist der Drainanschluß mit dem Widerstand 4, der Sourceanschluß mit dem Widerstand 5 und dem nicht invertierenden Eingang des Komparators 10 verbunden. Das Gate des Feldeffekttransistors 3 ist mit dem Kollektor des Fototransistors 2 verbunden.

Der invertierende Eingang des Komparators 10 ist unmittelbar mit dem gegenüber dem Bezugspotential 0V Spannung führenden Anschluß des Strommeßwiderstandes 23 verbunden. Parallel zu dem Zweig des Sollwert-Spannungsteilers, der den Feldeffekttransistor 3 enthält,ist der Widerstand 26 angeordnet.

Die Steuerschaltung 9 ist als integrierte Schaltung, insbesondere als integrierter Ansteuerbaustein ausgebildet. Der Sollwert-Spannungsteiler 4, 3, 5 ist dabei an die hochkonstante, aber wenig belastbare Konstantspannungsquelle 11 der Steuerschaltung 9 angeschlossen.

Die Ausgangsspannung U2 wird vom Soll-Istwert-Vergleicher oder Fehlersignalverstärker 20 überwacht. Der Ausgang des Fehlersignalverstärkers 20 steuert die Eingangs-Fotodiode 21 des Optokopplers 21, 2 so an, daß ab dem Überschreiten des Nennwertes der Ausgangsspannung U2 der Fototransistor 2 leitend und mit weiter ansteigender Ausgangsspannung U2 niederohmiger wird. Dies bewirkt, daß die Sollwertspannung u4 am nicht invertierenden Eingang des Komparators 10 absinkt. Der Ansteuerbaustein 9 verkürzt daher den schaltimpuls, der den Feldeffekttransistor 22 leitend steuert. Auf diese Weise wird auch der Stromimpuls i kürzer und somit die Ausgangsspannung U2 abgesenkt.

Ist andererseits die Eingangsspannung U1 höher, steigt der Stromimpuls i schneller an und die Istwertspannung u5 erreicht in kürzerer Zeit den Wert der Sollwertspannung u5. Auf diese Weise wird der Stromimpuls i ebenfalls verkürzt.

Bei dem in der EP-A-0 576 702 beschriebenen Umrichter ist der Kollektor des Fototransistors über einen Widerstand an eine Hilfsspannung geführt. Parallel zur Emitter-Kollektor-Strecke des Fototransistors liegt ein Sollwert-Spannungsteiler, dessen Abgriff mit dem nicht invertierenden Eingang des Komparators verbunden ist.

Bei einer derartigen Anordnung fließt über den zwischen Kollektor und Hilfsspannung liegenden Widerstand und den Fototransistor ein Strom zum Bezugspotential O V und reduziert somit die am Kollektor des Fototransistors liegende Spannung, die bei gesperrtem Optokoppler-Ausgang etwa die Hälfte der Hilfsspannung betragen kann. Da die Widerstände des Sollwert- und des Istwertspannungsteilers zweckmäßigerweise hochohmig sind, um die Verlustleistung niedrig zu halten und um die Eingangsbedingungen für den Ansteuerbaustein einzuhalten, kann über den leitenden Fototransistor des Optokopplers nur ein sehr kleiner Strom fließen. Der minimal spezifizierte Arbeitsstrom des Optokopplers darf jedoch nicht unterschritten werden, da sich andernfalls im Grenzbetrieb des Spannungsreglers der Einsatzpunkt der Strombegrenzung verändern könnte.

Bei dem Schaltregler nach Fig. 1 bereitet es in vorteilhafter Weise keine Schwierigkeiten, den Optokoppler 21, 2 spezifikationsgerecht zu belasten und dennoch den Ansteuerbaustein 9 hochohmig zu beschalten.

Bei dem in Figur 1 gezeigten Umrichter ist der Fototransistor 2 des Optokopplers 21, 2 vom Ansteuerbaustein 9 durch den Feldeffekttransistor 3 entkoppelt, der insbesondere ein MOSFET-Kleinsignaltransistor ist. Der Feldeffekttransistor 3 dient als Koppelglied zwischen dem Fototransistor 2 und dem Ansteuerbaustein 9. Von besonderem Vorteil ist dabei, daß der Feldeffekttransistor 3 mit seiner Gate-Source-Schwellspannung von z.B. 0,8 V dem Fototransistor 2 einen vorteilhaften Arbeitspunkt verschafft. Die Schwellenspannung des Feldeffekttransistors 3 liegt nämlich deutlich über der Ausgangssättigungsspannung des Fototransistors 2 von z.B. 0,4 V, die an der Emitter-Kollektor-Strecke des Fototransistors 2 auftritt.

Der spannungsgesteuerte Feldeffekttransistor 3 ermöglicht außerdem eine praktisch rückwirkungsfreie Ankopplung zwischen dem Optokoppler 2, 21 und dem Ansteuerbaustein 9. Der Spannungsteiler 4, 3, 5 ist an der hochgenauen, aber gering belastbaren Konstantspannungsquelle 11 des Ansteuerbausteins 9 angeschlossen und kann in vorteilhafter Weise ohne Rücksicht auf die Strom-Spannungsanforderungen des Optokopplers 2, 21 dimensioniert werden.

Solange der Schaltregler im Spannungsregelbetrieb arbeitet, wird die am nicht invertierenden Eingang des Komparators 10 liegende Spannung u4 über den Optokoppler 21, 2 vom Fehlersignalverstärker 20 ständig nachgeregelt. Der maximale Ausgangsgleichstrom ist erreicht, wenn der Feldeffekttransistor 3 ganz niederohmig gesteuert ist.

Da der Bahnwiderstand R_{DSon} des leitend gesteuerten Feldeffekttransistors 3 vernachlässigt werden kann, ist die Sollwertspannung u4 und damit der Einsatzpunkt der Strombegrenzung im wesentlichen abhängig von dem Spannungsteiler 4, 5 und von der Konstanz der Spannung U8 der Konstantspannungsquelle 11. Die von der Konstantspannungsquelle 11 gelieferte konstante Spannung U8 ist wesentlich stabiler als die für die Versorgung des Ansteuerbausteins 9 benötigte Hilfsspannung U₃, die vom Regler 8 nur grob geregelt und außerdem auch von der Ausgangsspannung U2 her verändert wird.

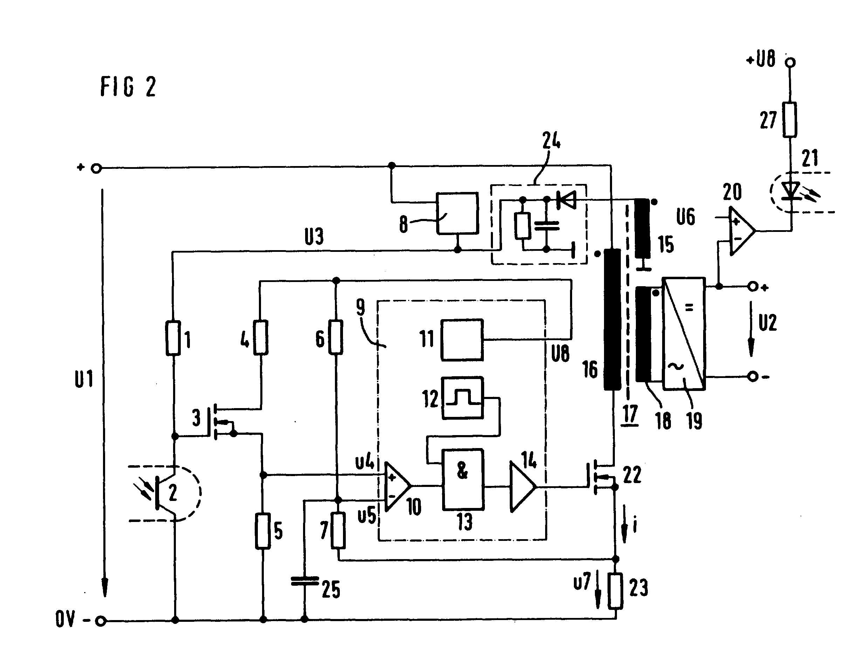

Der Umrichter nach Fig. 2 stimmt mit dem nach Fig. 1 weitgehend überein. Abweichend von Fig. 1 gehört der Strommeßwiderstand 23 dem Istwert-Spannungsteiler 6, 7 an, der zusätzlich zum Sollwert-Spannungsteiler 4, 3, 5 an die Konstantspannung U8 angeschlossen ist. Dabei liegt zwischen dem Ausgang der Konstantspannungsquelle 11 und dem Bezugspotential 0V die aus den Widerständen 6, 7 und 23 bestehende Serienschaltung und der Verbindungspunkt der Widerstände 6 und 7 ist mit dem invertierenden Eingang des Komparators 10 verbunden. Außerdem ist zwischen dem invertierenden Eingang des Komparators 10 und dem Bezugspotential 0V der Kondensator 25 angeordnet.

In den Figuren 1 und 2 ist jeweils ein als Eintakt-Durchflußumrichter ausgebildeter Schaltregler gezeigt. Der ausgangsseitige Hauptstromkreis 19 enthält in diesem Fall in einem mit der Sekundärwicklung 18 verbundenen Längszweig eine Gleichrichterdiode, in einem darauffolgenden Querzweig eine Freilaufdiode, in einem darauffolgenden Längszweig eine Drossel und parallel zum Umrichterausgang einen Kondensator. In entsprechender Weise können auch andersartige Schaltregler, insbesondere Sperrumrichter oder Schaltregler in Gegentaktschaltung in entsprechender Weise ausgebildet werden. Als Steuerschaltung dient insbesondere ein integrierter Ansteuerschaltkreis vom Typ TDA 4916.

## Patentansprüche

1. Getakteter Gleichspannungs-Umrichter mit Übertrager und mit einer Steuerschaltung (9) zur Regelung der Ausgangsspannung (U2) durch unterlagerte Stromregelung und mit Begrenzung des Momentanwertes des im primärseitigen Hauptstromkreis fließenden pulsförmigen Stromes (i), mit einem im primärseitigen Hauptstromkreis des Umrichters in Serie zu einem Leistungsschalter (22) liegenden Strommeßwiderstand (23), mit einem an den Ausgang des Umrichters angeschlossenen Spannungsregler (20) und einem eine Fotodiode (21) und einen Fototransistor (2) enthaltenden Optokoppler (21, 2), wobei die Fotodiode (21) an den Ausgang des Spannungsreglers (20) angeschlossen ist und die Emitter-Kollektor-Strecke des Fototransistors (2) einer Vorrichtung zur Sollwertbildung angehört, die einen Sollwert-Spannungsteiler (4, 5) enthält, an dessen Abgriff der nicht invertierende Eingang eines Komparators (10) der Steuerschaltung liegt, wobei ein Anschluß des Strommeßwiderstandes (24) und der Emitter des Fototransistors (2) an einem gemeinsamen Bezugspotential (0V) liegen, der gegenüber dem Bezugspotential (0V) Spannung führende Anschluß des Strommeßwiderstandes (23) an den invertierenden Eingang des Komparators (10) geführt ist und der Kollektor des Fototransistors (2) über einen Widerstand (1) an eine Hilfsspannung (U3) geführt ist, und
daß in dem dem Bezugspotential (0V) abgewandten Zweig des Sollwert-Spannungsteilers (4, 5)in Serie zum Widerstand (4) die Drain-Source-Strecke eines Feldeffekttransistors (3) liegt, und daß das Gate des Feldeffekttransistors (3) mit dem Kollektor des Fototransistors (2) verbunden ist.

2. Umrichter nach Anspruch 1,
**dadurch gekennzeichnet**,
daß der invertierende Eingang des Komparators (10) unmittelbar mit dem Strommeßwiderstand (23) verbunden ist und daß parallel zu dem den Feldeffekttransistor (3) enthaltenden Zweig (4, 3) des Sollwert-Spannungsteilers ein Widerstand (26) angeordnet ist.

3. Umrichter nach Anspruch 1,
**dadurch gekennzeichnet,**
daß der Strommeßwiderstand (23) einem an eine Konstantspannung (U8) angeschlossenen Istwert-Spannungsteiler (6, 7, 23) angehört.

4. Umrichter nach Anspruch 1,
**dadurch gekennzeichnet,**
daß zwischen dem invertierenden Eingang des Komparators (10) und dem Bezugspotential (0V ) ein Kondensator (25) angeordnet ist.

5. Umrichter nach einem der Ansprüche 1 bis 4,
**dadurch gekennzeichnet,**
daß die Steuerschaltung (9) als integrierte Schaltung ausgebildet ist und daß der Sollwert-Spannungsteiler (4, 3, 5) an eine Konstantspannungsquelle (11) der Steuerschaltung (9) angeschlossen ist.

6. Umrichter nach Ansrpuch 5,
**dadurch gekennzeichnet,**
daß der Istwert-Spannungsteiler (6, 7, 23) an die Konstantspannungsquelle (11) der Steuerschaltung (9) angeschlossen ist.

## Claims

1. Switched-mode d.c. converter having a transformer and having a control circuit (9) for regulating the output voltage (U2) by means of secondary current control and having limitation of the instantaneous value of the pulse-like current (i) flowing in the primary main circuit, having a current measuring resistor (23) located in series with a power switch (22) in the primary main circuit of the converter, having a voltage regulator (20) connected to the output of the converter, and an opto-coupler (21, 2) containing a photodiode (21) and a phototransistor (2), the photodiode (21) being connected to the output of the voltage regulator (20) and the emitter/collector junction of the phototransistor (2) belonging to a device for forming the desired value, which contains a desired value voltage divider (4, 5) to the tap of which the non-inverting input of a comparator (10) is applied, one connection of the current measuring resistor (24) and the emitter of the phototransistor (2) lying at a common reference potential (0V), that connection of the current measuring resistor (23) carrying voltage with respect to the reference potential (0V) being led to the inverting input of the comparator (10) and the collector of the phototransistor (2) being led via a resistor (1) to an auxiliary voltage (U3), and the drain/source junction of a field effect transistor (3) being located in series with the resistor (4) in that branch of the desired value voltage divider (4, 5) remote from the reference potential (0V), and the gate of the field effect transistor (3) being connected to the collector of the phototransistor (2).

2. Converter according to Claim 1, characterized in that the inverting input of the comparator (10) is connected directly to the current measuring resistor (23), and in that a resistor (26) is arranged in parallel to that branch (4, 3) of the desired value voltage divider containing the field effect transistor (3).

3. Converter according to Claim 1, characterized in that the current measuring resistor (23) belongs to an actual value voltage divider (6, 7, 23) which is connected to a constant voltage (U8).

4. Converter according to Claim 1, characterized in that a capacitor (25) is arranged between the inverting input of the comparator (10) and the reference potential (0V).

5. Converter according to one of Claims 1 to 4, characterized in that the control circuit (9) is designed as an integrated circuit, and in that the desired value voltage divider (4, 3, 5) is connected to a constant voltage source (11) of the control circuit (9).

6. Converter according to Claim 5, characterized in that the actual value voltage divider (6, 7, 23) is connected to the constant voltage source (11) of the control circuit (9).

## Revendications

1. Convertisseur continu-continu cadencé, comportant un transformateur et un circuit de commande (9) pour la régulation de la tension de sortie (U2) par régulation de courant en cascade et avec limitation de la valeur instantanée du courant (i) en forme d'impulsions passant dans le circuit principal côté primaire, comportant une résistance de mesure de courant (23) qui se trouve dans le circuit principal côté primaire du convertisseur, en série avec un disjoncteur (22), un régulateur de tension (20) raccordé à la sortie du convertisseur et un coupleur optoélectronique (21, 2) comprenant une photodiode (21) et un phototransistor (2), la photodiode (21) étant raccordée à la sortie du régulateur de tension (20) et la voie émetteur-collecteur du phototransistor (2) faisant partie d'un dispositif pour la formation de valeurs de consigne qui comprend un diviseur de tension à valeur de consigne (4, 5) à la prise duquel se trouve l'entrée non inverseuse d'un comparateur (10) du circuit de commande, dans lequel une borne de la résistance (23) de mesure de courant et l'émetteur du phototransistor (2) se trouvent à un potentiel de référence (0V) commun, que la borne, conduisant la tension et opposée au potentiel de référence (0V), de la résistance (23) de mesure de courant est reliée à l'entrée inverseuse du comparateur (10), le collecteur du phototransistor (2) est relié à une tension auxiliaire (U3) par l'intermédiaire d'une résistance (1), la voie drain-source d'un transistor à effet de champ (3) se trouve en série avec la résistance (4) dans la branche, éloignée du potentiel de référence (0V), du diviseur de tension à valeur de consigne (4, 5) et que la grille du transistor à effet de champ (3) est reliée au collecteur du phototransistor (2).

2. Convertisseur selon la revendication 1,
caractérisé par le fait que
l'entrée inverseuse du comparateur (10) est reliée directement à la résistance (23) de mesure de courant et une résistance (26) est placée en parallèle avec la branche (4, 3), comprenant le transistor à effet de champ (3), du diviseur de tension à valeur de consigne.

3. Convertisseur selon la revendication 1,
caractérisé par le fait que
la résistance (23) de mesure de courant appartient à un diviseur de tension à valeur réelle (6, 7, 23) qui est raccordé à une tension constante (U8).

4. Convertisseur selon la revendication 1,
caractérisé par le fait que
un condensateur (25) est placé entre l'entrée inverseuse du comparateur (10) et le potentiel de référence (0V).

5. Convertisseur selon l'une des revendications 1 à 4,
caractérisé par le fait que
le circuit de commande (9) est conçu comme un circuit intégré et le diviseur de tension à valeur de consigne (4, 3, 5) est raccordé à une source de tension constante (11) du circuit de commande (9).

6. Convertisseur selon la revendication 5,
caractérisé par le fait que
le diviseur de tension à valeur réelle (6, 7, 23) est raccordé à la source de tension constante (11) du circuit de commande (9).
